# EUROPEAN PATENT SPECIFICATION

(11) **EP 1 197 141 B1**
(45) Date of publication and mention of the grant of the patent: **22.09.2004**
(21) Application number: 01203724.8
(22) Date of filing: 01.10.2001
(51) Int. Cl.: A01J 7/04

(54) **A device for and a method of cleaning teats**
Vorrichtung und Verfahren zum Reinigen von Zitzen
Dispositif et méthode de nettoyage des pis

(30) Priority: 10.10.2000 NL 1016375
(43) Date of publication of application: 17.04.2002
(73) Proprietor: Lely Enterprises AG, 6300 ZUG (CH)
(72) Inventor: Van Der Lely, Alexander, 3065 NA Rotterdam (NL); Fransen, Renatus Ignatius Josephus, 3135 ZD Vlaardingen (NL)
(74) Representative: Corten, Maurice Jean F.M.

(56) References cited:
- EP-A- 0 737 031
- WO-A-99/05904

## Description

The invention relates to a device for cleaning the teats of the udder of a dairy animal, said device being provided with a cleaning member that is drivable by a drive member, the cleaning member being provided with at least two cleaning elements that are rotatable about an axis.

The invention further relates to a method of cleaning the teats of the udder of a dairy animal, the cleaning being carried out by a cleaning member driven by a drive member, the cleaning member being provided with at least two cleaning elements that are rotatable about an axis.

Such a device for and such a method of cleaning teats, in which rollers or brushes are used as cleaning elements, have been applied for a long time already. The drive member comprises mechanical shafts with drive means or electric connections. Upon correct operation thereof the cleaning elements are set in rotation for cleaning the teats. However, in practice it happens that in certain cases not all the teats appear to have been cleaned after application of the device or the method. Although by visual inspection or by using high-grade equipment it is possible to check whether cleaning has taken place correctly, this requires extra time and/or additional costs. Moreover, for safety reasons, e.g. electric connections in the vicinity of an animal are undesirable.

It is an object of the invention to provide a device for and a method of cleaning the teats of an udder of a dairy animal, in which a cleaning of all the teats can be obtained in a simple and safe manner.

For that purpose, in a first aspect of the invention, a device of the above-described type is characterized in that the drive member is constituted by a pneumatic or hydraulic drive member, and in that the device is provided with a torque measuring system for measuring the torque of the drive member during the drive of the cleaning member. Precisely the use of a pneumatic or hydraulic drive member offers, besides an increased security during cleaning, unexpected advantages in the drive of the cleaning elements, so that the above-mentioned aim can be achieved. Such a torque measuring system offers inter alia the possibility of monitoring the momentary torque of the drive member and consequently of checking whether the device operates correctly. The torque measured can be made visible e.g. on a remotely disposed picture screen.

In particular a pneumatic or hydraulic drive member is advantageous when the cleaning elements are rotatable in two directions.

If desired, an automatic feedback between the torque measured and the drive by the driving member can be obtained in an embodiment in which the device is provided with a control member for controlling the drive member, said control member controlling the drive member with the aid of data from the torque measuring system.

In the situation of a too flabby udder it may happen that, during cleaning, the cleaning elements not only draw the teat but also the udder between the cleaning elements. Moreover, in some cases the cleaning elements may grip a teat at a too high level, which is undesirable. In an embodiment of a device according to the invention this can be prevented when the control member is provided with a comparator that compares the momentary value of the torque measured by the torque measuring system with an upper threshold. When the situation of gripping a teat at a too high level or drawing the udder between the cleaning elements occurs, the torque of the drive member will increase. When the torque exceeds the upper threshold, suitable measures can be taken automatically. For example, the two cleaning elements can be moved away from each other if the construction allows such a motion.

When the upper threshold is reached, the control member preferably changes the direction of rotation of the cleaning elements into the opposite direction. After some time, as a result of the opposite rotation, e.g. the udder and possibly also the teat has been removed from between the cleaning elements, and a renewed attempt to clean the teat can be made. This takes place preferably automatically in that the control member is provided with a time switch for changing the direction of rotation into the opposite direction after an adjustable period of time has elapsed.

In an embodiment of a device according to the invention the control member is provided with a comparator that compares the momentary value of the torque measured by the torque measuring system with a lower threshold. By means of such a comparison it can be established whether a teat has been touched by the cleaning elements during cleaning. The fact is that when a teat is being cleaned, the torque of the drive member increases in comparison with the situation in which the cleaning elements are freely rotating. When the lower threshold is not reached a relevant teat has not been cleaned, and it is possible to control the means in question in such a manner that there is made a renewed attempt to clean said teat. Thus the lower threshold provides a simple means for checking whether all the teats have been cleaned.

An extremely cheap and reliable device is obtained when the control member is constituted by a pressure switch valve.

The cleaning member is preferably disposed on a robot arm, so that all positions can be reached by steering the robot arm.

When the robot arm is provided with teat cups, the cleaning device according to the invention can simply be integrated into an automatic milking implement.

According to a second aspect of the invention there is provided a method of cleaning the teats of the udder of a dairy animal, the cleaning being carried out by a cleaning member driven by a drive member, the cleaning member being provided with at least two cleaning elements that are rotatable about an axis, characterized in that the drive member is constituted by a pneumatic or hydraulic drive member, and in that the method further comprises the step a) of measuring the torque of the drive member.

Preferably the method further comprises the step b) of comparing the torque measured in step a) with a torque threshold value, and the step c) of controlling the drive member with the aid of results obtained from step b).

In particular there is chosen an upper threshold as a torque threshold value, and the direction of rotation of the cleaning elements is changed into the opposite direction when the upper threshold is exceeded.

Additionally or alternatively there is chosen a lower threshold as a torque threshold value, and there is given an indication that the teat has been cleaned when the lower threshold is exceeded.

The invention will be described hereinafter by way of example with reference to an embodiment shown in the drawing, in which:
Figure 1 is a schematic plan view of a device for cleaning teats according to the present invention, and
Figures 2A through 2F show schematically some steps of a method of cleaning the teats of an udder according to the present invention.

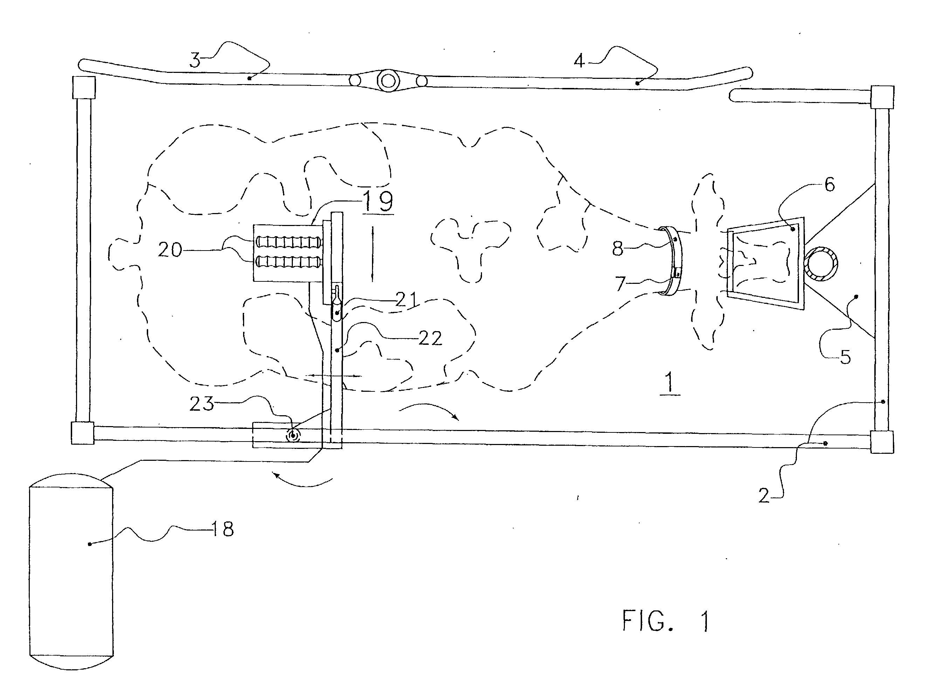

In the embodiment shown in Figure 1 the device for cleaning the teats of the udder of a dairy animal, such as a cow, comprises a cleaning parlour 1 which is confined by a fencing 2 and two doors 3 and 4. The cleaning parlour 1 can be combined with a milking implement so as to form a milking/cleaning parlour, although the invention is not limited thereto. Via the entrance door 3 an animal can enter the parlour 1, while the animal can leave the parlour 1 via the exit door 4. The parlour 1 further comprises an automatic feeding system 5 with a feeding trough 6. In the vicinity of the feeding trough 6 there is provided a sensor which is not shown in the figure and which is capable of co-operating with a transponder 7 that is fitted to the collar 8 of the animal. Said sensor is connected to a not further shown computer system and forms with the transponder 7 an animal identification system known per se. With the aid of said animal identification system animals entering the parlour 1 can be identified. When an animal has been identified in the parlour 1, a data file concerning the animal in question can be accessed in the computer. Said data file contains the data relevant to the feed supply and, if desired, further data relevant to cleaning and milking of the animal in question. These data may also contain the data about the position of the teats of the animal relative to a particular reference point. It frequently happens that partially on the basis of these data a cleaning member is placed under the animal's udder. Alternatively there may be provided means for placing and retaining the animal in a certain position in the milking/cleaning parlour 1, after which the cleaning member 19 performs standard motions. In the latter case data from the animal identification system are not necessary for cleaning.

The device may also be provided with a milking robot, not shown in Figure 1, said milking robot comprising teat cups that are mounted on a robot arm.

Usually the udder or at least the teats of the animal are cleaned prior to the milking proper of the animal. For that purpose there is provided a cleaning member 19, constituted by two motor-drivable cleaning elements 20, e.g. rollers or brushes. The teats to be cleaned are drawn between the two cleaning elements 20 by means of the rotating motion of the cleaning elements 20 and are thus cleaned.

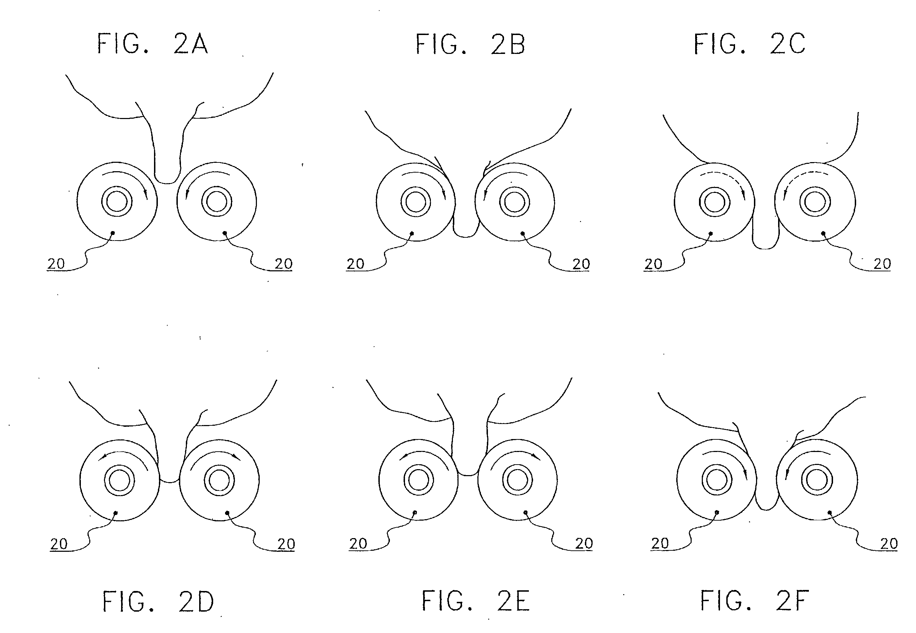

The cleaning elements 20 are shown in Figure 2 in the form of rollers. In the embodiment shown in Figure 1 the cleaning rollers 20, as well as the drive member 21 driving said rollers pneumatically or hydraulically, are disposed near the end of a robot arm 22. Said robot arm 22 may be movable both in the longitudinal direction of the parlour 1 and in a direction transversely thereto as well as in height. The robot arm 22 may further also be pivotable about a vertical axis 23.

Figure 2 shows the cleaning rollers 20 having a circular cross-section. In the longitudinal direction, these rollers 20 extend e.g. accordion-like, as indicated in Figure 1, so that the teats drawn between the rollers 20 will come into contact therewith as much as possible. During cleaning the direction of rotation of the rollers 20 is such that they move along the teat from top to bottom. In this way, both the teat is drawn between the rollers 20 and dirt is discharged downwards. If desired, the rollers 20 may be moistened, e.g. from the inside by a supply of water through a tube which is concentric with the drive shaft of the rollers. During cleaning of the teats the rotating motion of the rollers 20 can furthermore be combined with a motion in vertical direction downwards and/or with a motion in horizontal direction.

The cleaning rollers 20 may be mounted so as to be movable relative to each other, so that the distance between the rollers 20 can be increased or decreased somewhat, as a result of which the pressure of the cleaning rollers 20 on the teat is adjustable.

According to the invention the drive member 21 is constituted by a pneumatic or hydraulic drive member 21. As a result thereof the cleaning elements 20 are driven in an advantageous manner. Moreover, the drive is safe for the animal, because no electric connections are needed for the drive. The drive may also be an eccentric drive. By the eccentric drivability an alternating pressure can be exercised on the teat. By means of the eccentric motion a pulsatory action is exercised on a teat, while the pulsation frequency can be attuned to an optimal cleaning, with a massage function if desired. The invention will be described hereinafter by way of example with reference to an air-operated engine, although it will be obvious that the invention is not limited thereto.

The cleaning rollers 20 may be made from a deformable material. This deformability can be effected e.g. by pressing air into the inside of the cleaning rollers 20 and by making on the inner side a number of perforations through which the air can exert a force in radial outward direction on the material enveloping the cleaning rollers 20. Due to this deformability, the cleaning rollers 20 can be given an unround shape, so that upon driving of the cleaning rollers 20 there is again exercised a pulsatory action on the teat. The cleaning elements 20 may have an unround and in particular an ellipse-like shape.

Irrespective of the design of the cleaning elements 20, the distance between the cleaning elements 20 is preferably adjustable in all situations and the cleaning elements are preferably movable in height in all situations, so that, regardless the fact whether the elements are circular or have an unround shape or are shiftable in phase relative to each other, the pressure exercised by the elements on the teats can always be adjusted.

It may occur that during cleaning the cleaning elements 20 grip a teat at a too high level and/or draw between them besides the teat also the udder. Causes thereof may be e.g.: an incorrect distance between the cleaning elements 20, or an incorrectly adjusted pressure exercised by the cleaning elements 20 on the teat. This situation is shown in Figure 2C.

In order to prevent this situation that may involve an insufficient cleaning of the teats, according to the invention, at the moment when the cleaning elements 20 exercise a too great force on the teat, the direction of rotation of the cleaning elements 20 is preferably changed into the opposite direction. Alternatively, the cleaning elements 20 can be moved away from each other so that the teat is entirely released.

The moment when the cleaning elements 20 grip the teat at a too high level or also draw the udder between them can e.g. be determined by monitoring the rotational speed of the cleaning elements 20. When this rotational speed comes below a predetermined value during cleaning, measures for preventing insufficient cleaning can be taken, such as e.g. changing the direction of rotation into the opposite direction.

However, an extremely elegant way of determining this moment, which moreover enables a very quick reaction to the occurrence of the above-described undesirable situations, is the use of a torque measuring system for measuring the torque of the drive member during the drive of the cleaning member. Such a torque measuring system offers inter alia the possibility of monitoring the momentary torque of the drive member and consequently of checking whether the device functions correctly. The torque measured can be made visible e.g. on a remotely disposed screen. For this torque measuring system separate devices, known per se, may be used. However, it is advantageous to use drive members having an integrated torque measuring system.

In an embodiment of a device according to the invention a control member ensures an automatic feedback to the drive member by means of the torque measured. In particular the control member is provided with a comparator that compares the momentary value of the torque measured by the torque measuring system with an upper threshold. When e.g. the situation of gripping a teat at a too high level occurs, the torque of the drive member will increase. When the torque exceeds the upper threshold, suitable measures can thus be taken automatically by the control member. The two cleaning elements can e.g. be moved away from each other if the construction allows such a motion.

When the upper threshold is reached, the control member preferably changes the direction of rotation of the cleaning elements 20 into the opposite direction. After some time, as a result of the opposite rotation, the teat has been removed from between the cleaning elements, as shown in Figure 2E. When this situation has been reached, there may be supplied e.g. by the device a signal to the farmer to enable the latter to inspect the relevant cow and the cleaning elements. However, after the upper threshold has been exceeded, there are preferably first made one or more attempts to restart cleaning. This can take place preferably automatically when the control member is provided with a time switch for changing the direction of rotation into the opposite direction after an adjustable period of time has elapsed. This implies that the direction of rotation returns to the direction of rotation used for cleaning the teat, as schematically shown in Figure 2F.

Such an air-operated engine as a pneumatic drive member having an incorporated torque measuring system (with adjustable upper threshold) and a time switch is provided e.g. by the pressure switch valve VD-3-PK-3, which is supplied by the company Festo and which switches the air-operated engine.

Of course, the air-operated engine can also be controlled by an electronic control member with an electronic torque measuring system.

When the cleaning member is not controlled by a computer obtaining information from an animal identification system, it appears that in certain cases not all the teats are cleaned. The invention provides a simple possibility of checking whether a teat has actually been cleaned. This is achieved when the comparator compares the momentary value of the torque measured by the torque measuring system with a lower threshold. By means of such a comparison it can be established whether a teat has been touched by the cleaning elements during cleaning. The fact is that when a teat is being cleaned the torque of the drive member increases in comparison with the situation in which the cleaning elements are freely rotating. When the lower threshold is not reached, it can be assumed that a relevant teat has not been cleaned, and the means in question can be controlled in such a manner that a renewed attempt is made to clean said teat.

Although, in the embodiment shown, the robot arm 22 is only provided with a cleaning member, the robot arm is preferably also provided with teat cups. In this manner the cleaning device according to the invention can be integrated in a simple and compact manner into an automatic milking implement.

The invention also relates to a method of cleaning the teats of the udder of a dairy animal, the cleaning being carried out by a cleaning member driven by a pneumatic or hydraulic drive member, the cleaning member being provided with at least two cleaning elements that are rotatable about an axis. The method comprises the step a) of measuring the torque of the drive member; the measuring results thus obtained can be used in an advantageous manner, in particular by b) comparing the torque measured in step a) with a torque threshold value, and by c) controlling the drive member with the aid of results obtained from step b).

As explained above, insufficient cleaning of the teat can be prevented when an upper threshold is chosen as a torque threshold value and the direction of rotation of the cleaning elements is changed into the opposite direction when the upper threshold is exceeded.

By choosing a lower threshold as a torque threshold value it can be determined additionally or alternatively whether a teat has actually been cleaned. When said lower threshold has been exceeded, there can be given an indication that cleaning has taken place.

## Claims

1. A device for cleaning the teats of the udder of a dairy animal, said device being provided with a cleaning member (19) that is drivable by a drive member (21), the cleaning member (19) being provided with at least two cleaning elements (20) that are rotatable about an axis, **characterized in that** the drive member (21) is constituted by a pneumatic or hydraulic drive member (21), and **in that** the device is provided with a torque measuring system for measuring the torque of the drive member during the drive of the cleaning member.

2. A device as claimed in claim 1, **characterized in that** the cleaning elements (20) are rotatable in two directions.

3. A device as claimed in claim 1 or 2, **characterized in that** the device is provided with a control member for controlling the drive member, said control member controlling the drive member with the aid of data from the torque measuring system.

4. A device as claimed in claim 3, **characterized in that** the control member is provided with a comparator that compares the momentary value of the torque measured by the torque measuring system with an upper threshold.

5. A device as claimed in claim 3 or 4, **characterized in that** the control member is provided with a comparator that compares the momentary value of the torque measured by the torque measuring system with a lower threshold.

6. A device as claimed in claim 4 or 5, **characterized in that**, upon reaching the upper threshold, the control member changes the direction of rotation of the cleaning elements (20) into the opposite direction.

7. A device as claimed in any one of the preceding claims 3, 4, 5 or 6, with reference to claim 2, **characterized in that** the control member is provided with a time switch for changing the direction of rotation into the opposite direction after an adjustable period of time has elapsed.

8. A device as claimed in any one of the preceding claims 3 through 7, **characterized in that** the control member is constituted by a pressure switch valve.

9. A device as claimed in any one of the preceding claims, **characterized in that** the cleaning member (19) is disposed on a robot arm (22).

10. A device as claimed in claim 9, **characterized in that** the robot arm is provided with teat cups.

11. A method of cleaning the teats of the udder of a dairy animal, the cleaning being carried out by a cleaning member (19) driven by a drive member (21), said cleaning member (19) being provided with at least two cleaning elements (20) that are rotatable about an axis, **characterized in that** the drive member (21) is constituted by a pneumatic or hydraulic drive member (21), and **in that** the method further comprises the step a) of measuring the torque of the drive member (21).

12. A method as claimed in claim 11, **characterized in that** the method further comprises the step b) of comparing the torque measured in step a) with a torque threshold value, and the step c) of controlling the drive member (21) with the aid of results obtained from step b).

13. A method as claimed in claim 12, **characterized in that** an upper threshold is chosen as a torque threshold value, and **in that**, when said upper threshold is exceeded, the direction of rotation of the cleaning elements (20) is changed into the opposite direction.

14. A method as claimed in claim 12 or 13, **characterized in that** that a lower threshold is chosen as a torque threshold value, and **in that**, when said lower threshold is exceeded, there is given an indication that cleaning has taken place.

## Patentansprüche

1. Vorrichtung zum Reinigen der Zitzen des Euters eines milchgebenden Tieres, wobei die Vorrichtung mit einem Reinigungsglied (19) versehen ist, das durch ein Antriebsglied (21) antreibbar ist, wobei das Reinigungsglied (19) mit mindestens zwei Reinigungselementen (20) versehen ist, die um eine Achse drehbar sind,
**dadurch gekennzeichnet, daß** das Antriebsglied (21) durch ein pneumatisches oder hydraulisches Antriebsglied (21) gebildet ist, und daß die Vorrichtung mit einem Drehmomentmeßsystem zum Messen des Drehmoments des Antriebsgliedes während des Antriebs des Reinigungsgliedes versehen ist.

2. Vorrichtung nach Anspruch 1,
**dadurch gekennzeichnet, daß** die Reinigungselemente (20) in zwei Richtungen drehbar sind.

3. Vorrichtung nach Anspruch 1 oder 2,
**dadurch gekennzeichnet, daß** die Vorrichtung mit einem Steuerglied zum Steuern des Antriebsgliedes versehen ist, wobei das Steuerglied das Antriebsglied mit Hilfe von Daten des Drehmomentmeßsystems steuert.

4. Vorrichtung nach Anspruch 3,
**dadurch gekennzeichnet, daß** das Steuerglied mit einem Komparator versehen ist, der den Momentanwert des von dem Drehmomentmeßsystem gemessenen Drehmoments mit einem oberen Grenzwert vergleicht.

5. Vorrichtung nach Anspruch 3 oder 4,
**dadurch gekennzeichnet, daß** das Steuerglied mit einem Komparator versehen ist, der den Momentanwert des von dem Drehmomentmeßsystem gemessenen Drehmoments mit einem unteren Grenzwert vergleicht.

6. Vorrichtung nach Anspruch 4 oder 5,
**dadurch gekennzeichnet, daß** das Steuerglied bei Erreichen des oberen Grenzwertes die Drehrichtung der Reinigungselemente (20) in die entgegengesetzte Richtung ändert.

7. Vorrichtung nach einem der vorhergehenden Ansprüche 3, 4, 5 oder 6 unter Bezugnahme auf Anspruch 2,
**dadurch gekennzeichnet, daß** das Steuerglied mit einem Zeitschalter versehen ist, um die Drehrichtung in die entgegengesetzte Richtung zu ändern, nachdem ein einstellbarer Zeitraum verstrichen ist.

8. Vorrichtung nach einem der vorhergehenden Ansprüche 3 bis 7,
**dadurch gekennzeichnet, daß** das Steuerglied durch ein Druckschaltventil gebildet ist.

9. Vorrichtung nach einem der vorhergehenden Ansprüche,
**dadurch gekennzeichnet, daß** das Reinigungsglied (19) an einem Roboterarm (22) angeordnet ist.

10. Vorrichtung nach Anspruch 9,
**dadurch gekennzeichnet, daß** der Roboterarm mit Zitzenbechern versehen ist.

11. Verfahren zum Reinigen der Zitzen des Euters eines milchgebenden Tieres, wobei die Reinigung von einem Reinigungsglied (19) durchgeführt wird, das von einem Antriebsglied (21) angetrieben ist, wobei das Reinigungsglied (19) mit mindestens zwei Reinigungselementen (20) versehen ist, die um eine Achse drehbar sind,
**dadurch gekennzeichnet, daß** das Antriebsglied (21) durch ein pneumatisches oder hydraulisches Antriebsglied (21) gebildet ist, und daß das Verfahren ferner den Verfahrensschritt a) des Messens des Drehmoments des Antriebsgliedes (21) umfaßt.

12. Verfahren nach Anspruch 11,
**dadurch gekennzeichnet, daß** das Verfahren ferner den Verfahrensschritt b) des Vergleichens des in Verfahrensschritt a) gemessenen Drehmoments mit einem Drehmoment-Grenzwert und den Verfahrensschritt c) des Steuerns des Antriebsgliedes (21) mit Hilfe von im Verfahrensschritt b) erzielten Ergebnissen umfaßt.

13. Verfahren nach Anspruch 12,
**dadurch gekennzeichnet, daß** als Drehmoment-Grenzwert ein oberer Grenzwert gewählt wird, und daß bei Überschreiten des oberen Grenzwertes die Drehrichtung der Reinigungselemente (20) in die entgegengesetzte Richtung geändert wird.

14. Verfahren nach Anspruch 12 oder 13,
**dadurch gekennzeichnet, daß** als Drehmoment-Grenzwert ein unterer Grenzwert gewählt wird, und daß bei Überschreiten des unteren Grenzwertes eine Anzeige erfolgt, daß eine Reinigung stattgefunden hat.

## Revendications

1. Dispositif de nettoyage des trayons du pis d'un animal laitier, ledit dispositif étant pourvu d'un élément de nettoyage (19) qui peut être entraîné par un élément d'entraînement (21), l'élément de nettoyage (19) étant pourvu d'au moins deux éléments de nettoyage (20) qui tournent autour d'un axe, **caractérisé en ce que** l'élément d'entraînement (21) est constitué d'un élément d'entraînement pneumatique ou hydraulique (21), et **en ce que** le dispositif est pourvu d'un système de mesure de couple pour mesurer le couple de l'élément d'entraînement lors de l'entraînement de l'élément de nettoyage.

2. Dispositif selon la revendication 1, **caractérisé en ce que** les éléments de nettoyage (20) tournent dans deux directions.

3. Dispositif selon la revendication 1 ou 2, **caractérisé en ce que** le dispositif est pourvu d'un élément de commande pour commander l'élément d'entraînement, ledit élément de commande commandant l'élément d'entraînement à l'aide de données provenant du système de mesure de couple.

4. Dispositif selon la revendication 3, **caractérisé en ce que** l'élément de commande est pourvu d'un comparateur qui compare la valeur momentanée du couple mesuré par le système de mesure de couple à un seuil supérieur.

5. Dispositif selon la revendication 3 ou 4, **caractérisé en ce que** l'élément de commande est pourvu d'un comparateur qui compare la valeur momentanée du couple mesuré par le système de mesure de couple à un seuil inférieur.

6. Dispositif selon la revendication 4 ou 5, **caractérisé en ce que**, lorsque le seuil supérieur est atteint, l'élément de commande change la direction de rotation des éléments de nettoyage (20) en la direction opposée.

7. Dispositif selon l'une quelconque des revendications précédentes 3, 4, 5 ou 6, en référence à la revendication 2, **caractérisé en ce que** l'élément de commande est pourvu d'une minuterie pour changer la direction de rotation en la direction opposée après écoulement d'une période de temps ajustable.

8. Dispositif selon l'une quelconque des revendications précédentes 3 à 7, **caractérisé en ce que** l'élément de commande est constitué d'une valve pressostatique.

9. Dispositif selon l'une quelconque des revendications précédentes, **caractérisé en ce que** l'élément de nettoyage (19) est agencé sur un bras de robot (22).

10. Dispositif selon la revendication 9, **caractérisé en ce que** le bras de robot est pourvu de gobelets-trayeurs.

11. Procédé de nettoyage des trayons du pis d'un animal laitier, le nettoyage étant effectué par un élément de nettoyage (19) entraîné par un élément d'entraînement (21), ledit élément de nettoyage (19) étant pourvu d'au moins deux éléments de nettoyage (20) qui tournent autour d'un axe, **caractérisé en ce que** l'élément d'entraînement (21) est constitué d'un élément d'entraînement pneumatique ou hydraulique (21), et **en ce que** le procédé comprend en outre l'étape a) consistant à mesurer le couple de l'élément d'entraînement (21).

12. Procédé selon la revendication 11, **caractérisé en ce que** le procédé comprend en outre l'étape b) consistant à comparer le couple mesuré dans l'étape a) avec une valeur seuil de couple, et l'étape c) consistant à commander l'élément d'entraînement (21) à l'aide de résultats obtenus dans l'étape b).

13. Procédé selon la revendication 12, **caractérisé en ce qu'**un seuil supérieur est choisi en tant que valeur seuil de couple et **en ce que**, lorsque ledit seuil supérieur est dépassé, la direction de rotation des éléments de nettoyage (20) est changée en la direction opposée.

14. Procédé selon la revendication 12 ou 13, **caractérisé en ce qu'**un seuil inférieur est choisi en tant que valeur seuil de couple, et **en ce que**, lorsque ledit seuil inférieur est dépassé, il est indiqué que le nettoyage a été effectué.
